# EUROPEAN PATENT APPLICATION

(11) **EP 1 837 837 A1**
(43) Date of publication of application: **26.09.2007**
(21) Application number: 07104669.2
(22) Date of filing: 22.03.2007
(51) Int. Cl.: G08B 13/12

(54) **Active protection for closed systems**

(30) Priority: 23.03.2006 US 387659
(71) Applicant: Honeywell International, Inc., Morristown, New Jersey 07962 (US)
(72) Inventor: Fleischman, Scott G., Palmetto, FL 34221 (US); Heffner, Kenneth H., Largo, FL 33778 (US)
(74) Representative: Haley, Stephen

(57) **Abstract**

A method for limiting access to content-sensitive electronics is disclosed. The method involves monitoring an active barrier partition surrounding the content-sensitive electronics independent of normal operating activity and generating a tamper signal upon separation of an outer layer from an active sensing layer that comprise the active barrier partition. The method further involves responding to an unauthorized attempt to tamper with the active barrier partition.

## Description

In many electronic systems, manufacturers build protective technology (PT) features into the various hardware and software components of the electronic system product. The purpose of including PT in the product design is to protect information and proprietary features in component hardware, e.g., specialized integrated circuits, microprocessor software instructions, etc., that are considered highly-valuable intellectual property, and critical to continued success in the marketplace. In the case of highly-sensitive equipments, i.e., security monitoring and defense systems, any potential of tampering with and access to critical information must be mitigated to reduce the probability of a successful tampering attack.

In most instances, access to proprietary system components involves removing or circumventing, one or more layers of anti-tamper (AT) protection. Successful penetration or circumvention of one or more AT protection layers increases the risk of access to internal electronics by the perpetrator for the purpose of reverse engineering the design. Often, when an AT protection layer is disturbed, the reverse engineering attempt is hampered by a combination of AT features, such as: self-destroying components, encrypted software, and mechanical security keys. Security measures include multiple layers of security features, such as: tamper-proof enclosures and limited functionality if the system is disturbed without authorization.

However, additional physical barriers or partitions have the potential to damage and undermine regular operation of a system under even slightly abnormal operating conditions. With the addition of protective layering, especially tamper-proof enclosures, it is possible to create operating conditions that lead to a decrease in component life and overall performance. For example, the operating temperature inside the enclosure increases when additional physical barriers are installed. The potential for PT failure increases, especially when one or more AT mechanisms become overly reliant upon the actual electronics systems intended for protection. A current state of PT is limited by purely passive, i.e., unresponsive, methods of AT protection.

Embodiments of the present invention address problems with integrating protective technology with content-sensitive electronics and will be understood by reading and studying the following specification. Particularly, in one embodiment, a method for limiting access to content-sensitive electronics is provided. The method involves monitoring an active barrier partition surrounding the content-sensitive electronics independent of normal operating activity and generating a tamper signal upon separation of an outer layer from an active sensing layer that comprise the active barrier partition. The method further involves responding to an unauthorized attempt to tamper with the active barrier partition.

### In the Drawings:

Figure 1 is a cross-sectional view of an embodiment of a system integrating multiple active barrier partitions according to the teachings of the present invention;
Figure 2 is a cross-sectional view of an embodiment of a partition comprising multiple active barrier layers according to the teachings of the present invention;
Figure 3 is an enhanced view of an embodiment of an electronics chassis incorporating at least one active barrier partition according to the teachings of the present invention; and
Figure 4 is a flow chart that illustrates an embodiment of a method for limiting access to content-sensitive electronics according to the teachings of the present invention.

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical, and electrical changes may be made without departing from the spirit and scope of the present invention. The following detailed description is, therefore, not to be taken in a limiting sense.

Embodiments of the present invention address problems with integrating protective technology with content-sensitive electronics and will be understood by reading and studying the following specification. Particularly, in one embodiment, a method for limiting access to content-sensitive electronics is provided. The method involves monitoring an active barrier partition surrounding the content-sensitive electronics independent of normal operating activity and generating a tamper signal upon separation of an outer layer from an active sensing layer that comprise the active barrier partition. The method further involves responding to an unauthorized attempt to tamper with the active barrier partition.

Although examples of embodiments in this specification are described in terms of integrating protective technology circuit partitions for an electronic chassis, embodiments of the present invention are not limited to protective technology circuit partitions for an electronic chassis. Embodiments of the present invention are applicable to any protective technology activity that requires active barrier partitioning of content-sensitive equipment with one or more separate barrier layers independent of normal operating activity. Alternate embodiments of the present invention utilize protective technology layers integrated as one or more partitions in a system. The one or more partitions comprise physical and active features that fill one or more free volumes within at least one series of content-sensitive electronic assemblies contained in the system. Active partitioning materials will act as barriers to diminish accessibility to proprietary hardware and software features of the system independent of normal operation. The active partitioning materials are capable of dissipating heat energy away from the content-sensitive electronic assemblies. The active partitioning materials also provide additional physical support for any co-existing protective technologies within the system.

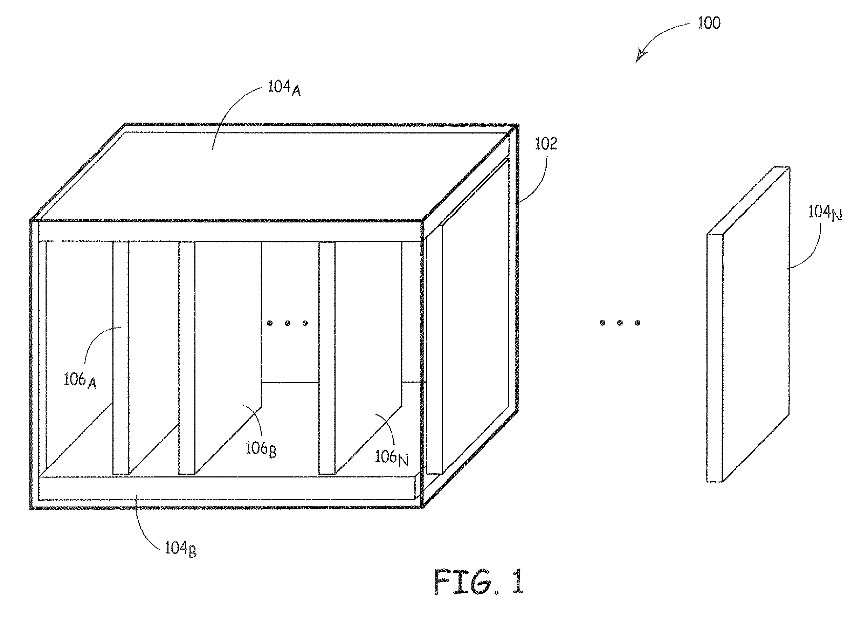

Figure 1 is a cross-sectional view of an embodiment of a system, indicated generally at 100, integrating multiple active barrier partitions according to the teachings of the present invention. System 100 comprises electronics chassis 102, partitions 104_{A} to 104_{N}, and a series of printed wiring board assemblies (PWBAs) 106_{A} to 106_{N}. It is noted that for simplicity in description, a total of three partitions 104_{A} to 104_{N} and three PWBAs 106_{A} to 106_{N} are identified in Figure 1. However, it is understood that system 100 supports any appropriate number of partitions 104 and PWBAs 106, e.g., one or more partitions and one or more PWBAs, in a single system 100. Each PWBA 106_{A} to 106_{N} contain proprietary, content-sensitive hardware and software components that are concealed by partitions 104_{A} to 104_{N}. These content-sensitive hardware and software components include (but are not limited to) microprocessors, memory devices, resistors, amplifiers, capacitors, inductors, and the like.

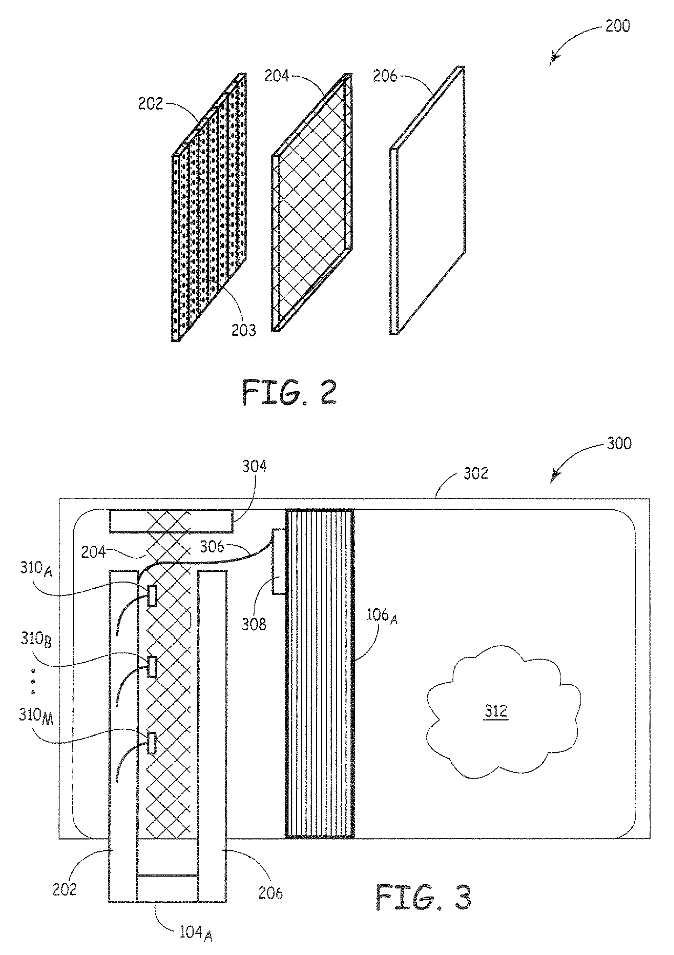

In this example embodiment, partitions 104_{A} to 104_{N} occupy free space between an outer perimeter of electronics chassis 102 and the series of PWBAs 106_{A} to 106_{N}. Partitions 104_{A} to 104_{N} are embedded within the outer walls of chassis 102. In another example embodiment, partitions 104_{A} to 104_{N} occupy free space around an outer perimeter of each individual PWBA 106_{A} to 106_{N}. Partitions 104_{A} to 104_{N} surround each individual PWBA 106_{A} to 106_{N}. In a third example embodiment, both example embodiments described above are combined, i.e., partitions 104_{A} to 104_{N} are embedded within the outer walls of chassis 102 and surround each individual PWBA 106_{A} to 106_{N}. Once partitions 104_{A} to 104_{N} are integrated within chassis 102, partitions 104_{A} to 104_{N} are considered an independent active barrier. The independent active barrier limits access to the content-sensitive components residing on PWBAs 106_{A} to 106_{N}. The composition and operation of partitions 104_{A} to 104_{N} is further described in detail below with respect to Figures 2 and 3, respectively.

Figure 2 is a cross-sectional view of an embodiment of a partition, indicated generally at 200, comprising multiple active barrier layers according to the teachings of the present invention. Panel 200 comprises each of primary outer layer 202, active sensing layer 204, and secondary outer layer 206. Primary outer layer 202 is configured as a flat surface and enables a mechanical interconnection between each of primary outer layer 202, active sensing layer 204, and secondary outer layer 206. Primary outer layer 202 is comprised of a rugged bulk material. Composition of the rugged bulk material includes, but is not limited to, a metallic alloy, a monolithic material, a polymer-based resin, a composite of filled and/or fibrous material, and the like. In an example embodiment, secondary outer layer 206 is comprised of similar material to primary outer layer 202, and active sensing layer 204 is comprised of a mechanical mesh screen.

Examples of the metallic alloy include beryllium, beryllium-copper, aluminum alloy, tantalum alloy, tungsten alloy, galvanized aluminum and stainless steel, nickel-plated copper, and other similar metallic materials. The metallic alloy is either bulk, e.g., extruded, cast, or sheet-rolled, or sintered, i.e., bonded by heating without melting, depending on the metallic alloy material selected. Examples of the monolithic material include silicon nitrate, aluminum nitride, and graphite, i.e., isostatically pressed, cured sol-gel, or laminated resin, depending on the material used. The monolithic material is filled with refractory or thermally conductive particles. Examples of the polymer-based resin include polyimide-based, epoxy-based, tetrafunctional-based, phenolic-based, carborane-siloxane-based, silioxane-based, and other highly cross-linked thermo-set resins. The highly cross-linked thermo-set resins are filled with fibrous or particle materials to enhance strength and dimensional stability.

Primary outer layer 202 and secondary outer layer 206 encase active sensor layer 204 and sensor array 203. Sensor array 203 is embedded within active sensing layer 204. During assembly of panel 200, an adhesive material is applied to a side of primary outer layer 202 that integrates, i.e., embeds, active sensing layer 204 with sensor array 203. Other integration methods are possible. In an example embodiment, sensor array 203 comprises at least one array of piezoelectric sensor elements. Sensor array 203 generates a voltage value in response to applied mechanical stress. In some embodiments, sensor array 203 is operated by one or more internal power sources. In other embodiments, sensor array 203 is unpowered, and the voltage value is filtered and amplified to initiate an ignition sequence for an actuator. The voltage value is sufficient to begin a pyrotechnic heating reaction of a thermal battery (not shown). The operation of sensor array 203 in conjunction with an active anti-tamper barrier provided by partitions 104_{A} to 104_{N} is described in further detail below with respect to Figure 3. Incorporating multiple layers within partitions 104_{A} to 104_{N} is an interactive approach to detecting any unauthorized tampering. The interactive approach described here is independent of any normal operating activity undertaken by PWBAs 106_{A} to 106_{N}.

Figure 3 is an enhanced view of an embodiment of an electronics chassis, indicated generally at 300, incorporating at least one active barrier partition according to the teachings of the present invention. In the example embodiment shown, chassis 300 comprises chassis wall 302, mounting bracket 304, at least one PWBA 106_{A}, and at least one partition 104_{A}. Further, each layer of the at least one partition 104_{A}, primary outer layer 202, inner layer 204, and secondary outer layer 206, are mounted within chassis 300. Inner layer 204 is coupled to mounting bracket 304. In turn, mounting bracket 304 is permanently affixed to chassis wall 302. PWBA 106_{A} further includes at least one response device 308, communicatively coupled to piezosensors 310_{A} to 310_{M} by at least one response path 306. The at least one response device 308 is capable of initiating one or more events to protect content-sensitive information contained within or residing on PWBA 106_{A}. The at least one response device 308 is representative of an electronic, thermal or mechanical actuator that amplifies one or more triggered responses, i.e., a sufficient turn-on voltage, from at least one of piezosensors 310_{A} to 310_{M}. It is noted that for simplicity in description, a total of three piezosensors 310_{A} to 310_{M}, at least one response device 308, and at least one response path 306 are identified in Figure 3. However, it is understood that the at least one partition 104_{A} supports any appropriate number of piezosensors 310, e.g., an array of piezosensors, in a single partition 104. It is further understood that PWBA 106_{A} supports any appropriate number of response devices 308 and response paths 306, e.g., at least one response device and response path, integrated with one or more PWBAs 106. The at least one response device 308 is further representative of an application-specific integrated circuit (ASIC), a field-programmable gate array (FPGA), and the like, that performs one or more protective measures, including (but not limited to), overwriting, erasing, or altering content-sensitive components with one of an electronic, a thermal, and a mechanical response sequence. The at least one response path 306 is an electrical connection that delivers a sufficient response voltage from piezosensors 310_{A} to 310_{M} to the at least one response device 308.

Chassis 300 further includes filler material 312 indicated by a clouded area. Filler material 312 consists of one or more of a blown foam, glass wool, rubber silicone, cyclic butyl terephthalate, Neoprene, an acrylic bead-filled bladder, and the like. Filler material 312 is capable of high flow prior to cure, and eventually surrounds each of partitions 104_{A} to 104_{N}. Structural support provided by filler material 312 is beneficial for any co-existing PT mechanisms present within chassis 300. In the example embodiment shown, filler material 312 is allowed to expand and fill any open volumes within chassis 300. Filler material 312 dissipates heat energy away from PWBAs 106_{A} to 106_{N}. Further, filler material 312 is an additional AT barrier within chassis 300. For example, filler material 312 prevents acoustic imaging of content-sensitive components on PWBAs 106_{A} to 106_{N} already encapsulated by partitions 104_{A} to 104_{N}. Additionally, filler material 312 insulates the content-sensitive components from electrical shock, and further hinders removal of partitions 104_{A} to 104_{N}.

In operation, the components of chassis 300 discussed above are assembled as a functioning electronics chassis. When a sufficient unauthorized attempt is made to remove partition 104_{A}, primary outer layer 202 and secondary outer layer 206 start to withdraw together. Inner layer 204 remains coupled to mounting bracket 304. As primary outer layer 202 and secondary outer layer 206 are withdrawn, piezosensors 310_{A} to 310_{M} generate a voltage in response to a sufficient increase in tensile stress, i.e., mechanical strain. Piezosensors 310_{A} to 310_{M} activate a built-in charging circuit to convert an electric charge to a tamper signal. The at least one response path 306 transfers the tamper signal to the at least one response device 308. The tamper signal is sufficient enough to activate the at least one response device 308 and begin the one or more protective measures discussed earlier. In the example embodiment described, inner layer 204 remains attached to chassis wall 302, subjected to a sufficient shearing force as outer layers 202 and 206 are withdrawn. Response device 308 activates only when piezosensors 310_{A} to 310_{M} determine at least one unauthorized removal of outer layers 202 and 206 is being attempted. Even under severe operating conditions, any premature activation of response device 308 will not occur unless a physical removal of at least partition 104_{A} is attempted. Piezosensors 310_{A} to 310_{M} do not impede normal operation of the electronic components that comprise chassis 300.

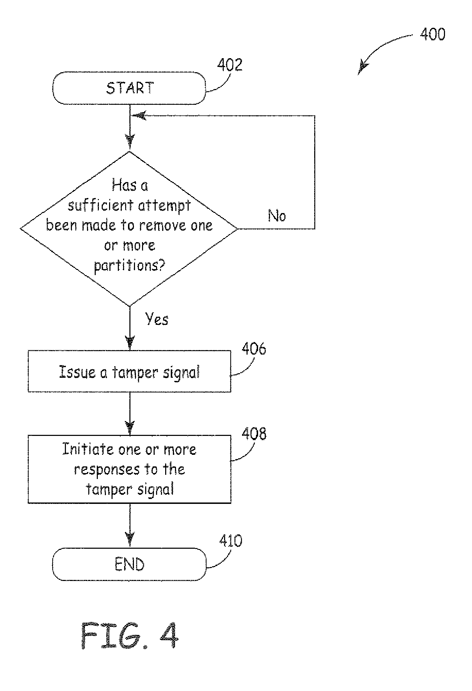

Figure 4 is a flow diagram illustrating a method 400 for limiting access to content-sensitive electronics according to the teachings of the present invention. Method 400 starts at step 402. In an example embodiment, chassis 300 is assembled as discussed earlier with respect to Figure 3 before method 400 begins monitoring any unauthorized attempts to tamper with chassis 102. A primary function of method 400 is to limit access to content-sensitive electronics independent from normal operating activity of the content-sensitive electronics.

At step 404, method 400 is continually monitoring if an attempt is made to remove one or more partitions from chassis wall 302, specifically one or more of partitions 104_{A} to 104_{N}. Once a sufficient attempt is made, a tamper signal is issued at step 406. Upon receipt of the tamper signal, one or more responses are initiated at step 408 to destroy and/or further conceal proprietary information residing on or within at least one PWBA 106_{A} to 106_{N}. The one or more responses function as discussed earlier with respect to Figure 3. Once the proprietary information is destroyed and/or further concealed, the method concludes at step 410.

The description of the present invention has been presented for purposes of illustration and description, and is not intended to be exhaustive or limited to the invention in the form disclosed. Variations and modifications may occur, which fall within the scope of the present invention, as set forth in the following claims.

## Claims

1. A method (400) for limiting access to content-sensitive electronics (e.g., 106_{A}, ..., 106_{N}), the method comprising:
monitoring an active barrier partition (104_{A}) surrounding the content-sensitive electronics (106_{A}) independent of normal operating activity (404);
generating a tamper signal (406) upon separation of an outer layer (202, 206) from an active sensing layer (204) that comprise the active barrier partition (104_{A}); and
responding to an unauthorized attempt (408) to tamper with the active barrier partition (104_{A}).

2. The method (400) of claim 1, wherein monitoring the active barrier partition (104_{A}) further comprises determining when the active barrier partition (104_{A}) experiences a mechanical strain.

3. The method (400) of claim 1, wherein monitoring the active barrier partition (104_{A}) further comprises maintaining visual separation between the content-sensitive electronics (e.g., 106_{A}, ... , 106_{N}) and an enclosure (102).

4. The method (400) of claim 1, wherein generating a tamper signal further comprises an array of piezoelectric sensor elements (e.g., 310_{A}, ... 310_{M}) generating a response voltage.

5. The method (400) of claim 1, wherein responding to an unauthorized attempt to tamper with the active barrier partition (104_{A}) further comprises one of overwriting, erasing, and altering content-sensitive components.

6. The method (400) of claim 1, wherein responding to an unauthorized attempt to tamper with the active barrier partition (104_{A}) further comprises one of an electronic, a thermal, and a mechanical response sequence.

7. A method (300) for forming an active anti-tamper barrier (e.g., 104_{A}, ... , 104_{N}), the method comprising:
coupling at least one active sensing layer (204) to an inside wall (302) of an enclosure (102); and
encasing each active sensing layer (204) with an outer layer (202, 206) to form the active anti-tamper barrier (104_{A}), whereby a tamper signal (406) is generated as an unauthorized attempt is made to remove the outer layer (202, 206) from any active sensing layer (204).

8. The method (300) of claim 7, wherein coupling the at least one active sensing layer (204) to the enclosure (102) further comprises securing the at least one active sensing layer (204) to an internal mounting bracket (304).

9. The method (300) of claim 7, wherein encasing each active sensing layer (204) with an outer layer (202, 206) to form the active anti-tamper barrier (104_{A}) further comprises embedding at least one array of piezoelectric sensor elements (e.g., 310_{A}, ... , 310_{M}) in the at least one active sensing layer (204).

10. The method (300) of claim 7, wherein encasing each active sensing layer (204) with an outer layer to form the active anti-tamper barrier (104_{A}) further comprises embedding at least one array of piezoelectric sensor elements (e.g., 310_{A}, ... , 310_{M}) in the outer layer (202, 206).
